# EUROPEAN PATENT APPLICATION

(11) **EP 1 515 451 A1**
(43) Date of publication of application: **16.03.2005**
(21) Application number: 04021197.1
(22) Date of filing: 07.09.2004
(51) Int. Cl.: H04B 1/69, H01P 1/203, H01P 1/215, H01P 1/213, H01P 11/00

(54) **System and device for transmission using ultrawide band pass filter**

(30) Priority: 09.09.2003 JP 2003316916
(71) Applicant: Daido Steel Co., Ltd., Nagoya-shi, Aichi-ken (JP); National Institute of Information and Communications Technology Incorporated Administrative Agency, Koganei-shi, Tokyo (JP)
(72) Inventor: Saito, Akihiko, c/o Daido steel Co., Ltd., Minami-ku Nagoya-shi Aichi-ken (JP); Harada, Hiroshi, Yokosuka-shi Kanagawa-ken (JP)
(74) Representative: Banzer, Hans-Jörg, Dipl.-Ing.

(57) **Abstract**

Disclosed are a transmission system and a device of small scale, low cost and low power for transmitting signal of a rate over 1Gbps using a small scale and low loss ultrawide band pass filter (UWBPF). The transmission system comprises the steps of generating pulse signal by a short pulse generator, band-limiting the pulse signal by passing it through a waveshape forming filter, and transmitting the resulting pulse signal in a certain frequency band through a UWBPF, and receiving and passing the signal wave through a UWBPF of the same frequency range and introducing the signal wave through a pulse detector into the determining part. The UWBPF used is prepared by forming a distribution constant circuit on a lossy substrate having low-pass function.

## Description

### BACKGROUND OF THE INVENTION

### Field in the Industry

The present invention concerns a system and a devise for transmission using an ultrawide band pass filter. In the present specification "ultrawide band" is abbreviated to "UWB", "band pass filter" to "BPF" and thus, "ultra wide band pass filter" to "UWBPF". The invention also concerns the device for the above-mentioned UWB transmission, namely, transmitters and receivers.

### Prior Art

It is current trend that the band width of information transmission is getting wider to be ultra wide. UWB transmission system is a typical one of such trend. Trial has been made to carry out the transmission of at the rate of some Gbps at highest by using, not carrier wave, but short pulses of width of some nanoseconds or less. The frequency band used for this communication was set to be 3.1-10.0GHz by FCC (Federal Communication Committee) of USA. For high quality transmission of UWB digital information using the frequency of this band width at a rate exceeding 1Gbps an UWBPF of frequency range the same as that of the band of transmitting information is necessary.

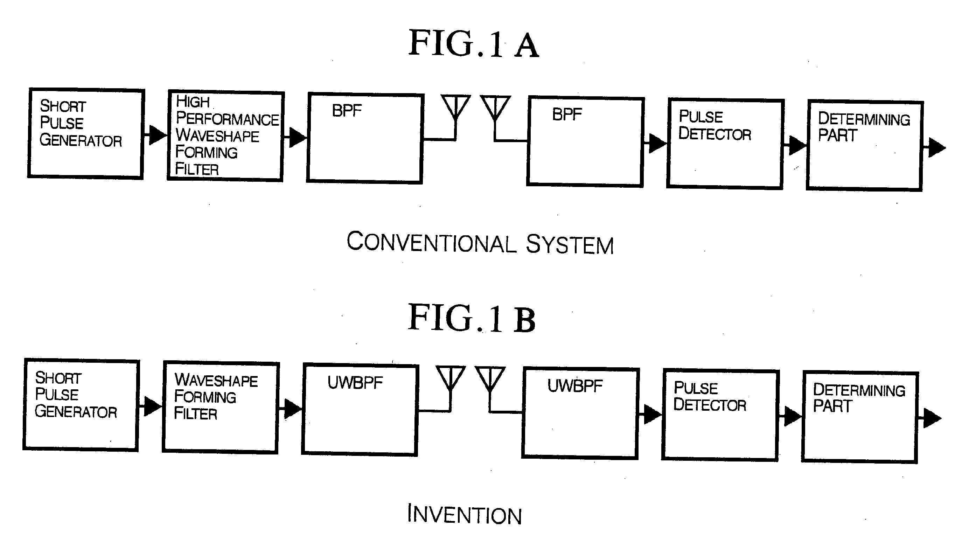

To date, there has been no UWBPF covering such a wide band, and therefore, it has been tried to use a combination of plural BPFs of relatively narrow frequency bands. Combination of the plural BPFS of narrow frequency bands causes accumulated attenuation which results in necessity of high-power output at the side of signal source, or a problem of difficulty in timing the transmission due to difference in delay depending on the frequency bands. In order to avoid such problems it is inevitable to use a high performance waveshape forming filter at the sending side. The system shown in Fig. 1A is such a system.

The system of Fig. 1A has been constructed, due to lack of low loss BPF at the wide band of some GHz, on the basis of necessity of forming pulse waveshape of transmitted signal at the waveshape forming filter of transmitting side so that the power may be concentrated to the transmission frequency band. Such a high performance waveshape forming filter should be highly precise and fine, and therefore, the devide is of a large scale and expensive.

Inventors succeeded in developing a small (for example, 50mm × 20mm × 1mm) and low loss UWBPF having a frequency width of some GHz by forming a distribution constant circuit on a lossy substrate having low-pass filter function cutting high frequency components.

A prototype of the UWBPF was already disclosed (Japanese Patent Application 2003-008811). Then the inventors developed a UWBPF of more sharp frequency characteristics and established a comprehensive principal of the UWBPF, and disclosed (Saito et al., "Development of a BPF for UWB (3.1GHz-10.6GHz)", Proceedings of the 2003 Communication Society, September, 2003). They expected that the newly developed UWBPF may realized the transmission system of the structure shown in Fig. 1B, and experiments revealed that the expectation was right.

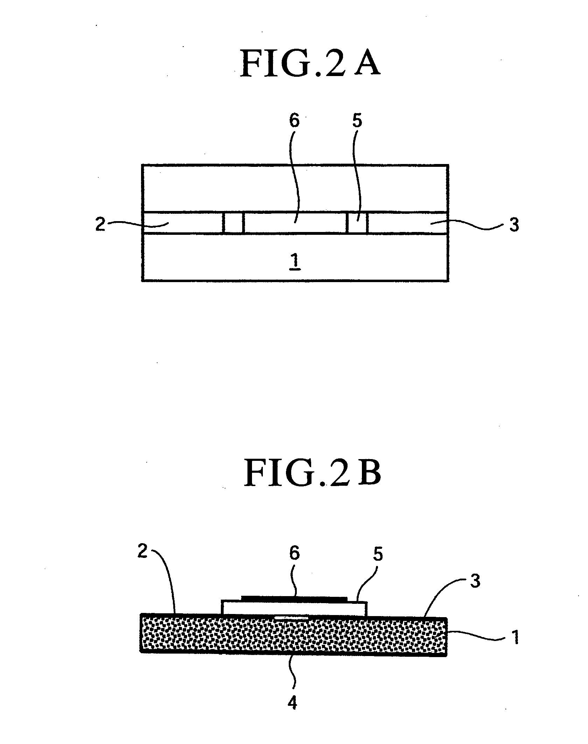

A practical example of the small, low-loss UWBPF is illustrated in Fig. 2. It is made by forming a distribution constant circuit on a lossy substrate having low-pass filter function cutting low frequency components. The UWBPF is prepared by disposing, on one surface a sheet 1 made by dispersing soft-magnetic metal powder in a polymer matrix, an input signal line 2 and an output signal line 3 both made of a conductive strip in series direction with a gap, another line, an internal line 6 made of a conductive strip is disposed with intermediation of an insulating film 5, in such a manner that the internal line bridges on both the input signal line 2 and the output signal line 3 and a GND line 4 is disposed on the reverse side of the above-mentioned sheet 1.

### BRIEF EXPLANATION OF THE DRAWINGS

Fig. 1 conceptionally illustrates the UWB transmission systems, A for that of conventional technology, and B for that according to the invention;
Fig. 2 illustrates the structure of the UWBPF used in the system according to the present invention, A being a plan view, and B being a longitudinal section view;
Fig. 3 conceptionally illustrates the equipment construction in Experiment 1 of the invention;
Fig. 4 is a graph showing S₂₁ transmission characteristics of the UWBPF used in Experiment 1, one scale of the ordinate of the graph being 10dB;
Fig. 5 is a graph showing the pulse signal which was transmitted in Experiment 1 and an eye-patern thereof; and,
Fig. 6 is a graph showing S₂₁ transmission characteristics of the UWBPF used in Experiment 2 of the invention.

### SUMMARY OF THE INVENTION

The object of the present invention is to provide a UWB transmission system using the above-mentioned, newly developed, small and low-loss UWBPF.

The transmission system of the present invention comprises: as shown in Fig. 1B, band limiting sub-nanosecond pulse signal generated by a short pulse generator with a waveshape forming filter, transmitting the pulse signal as the pulse signal wave of predetermined frequency band through the UWBPF, receiving the signal wave, passing it through the UWBPF the same as that of the transmitter, and introducing the signal wave through the pulse detector to the determining part. The above UWBPF is the above-described one made by forming the distribution constant circuit on a lossy substrate having function of low-pass filter cutting high frequency components.

### DETAILED DESCRIPTION OF THE PREFERRED EMBODIMENTS

As noted above, the communication standardized by FCC is carried out in the frequency range of 3.1-10.6 GHz, and therefore, the UWBPF is a BPF which passes the signal of this frequency range.

One part of the device for carrying out the present UWB transmission system is a transmitter comprising a short pulse generator generating sub-nanosecond pulse signal, a waveshape forming filter for band limiting, a UWBPF which passes signal of a predetermine frequency range, and a sending antenna. A practical device should contain an attenuator, which attenuates output of transmission so as to send signal in accordance with the legal regulations.

Another part of the device is a receiver comprising a receiving antenna, a UWBPF which passes signal of a predetermined frequency range, a pulse detector, and a determinator.

Both the transmitter and the receiver are, if they are used for the communication as standardized by FCC, the frequency range which the UWBPF passes must be, as noted above, 3.1-10.6GHz.

According to the transmission system of the present invention, because the UWBPF used is of such a simple structure as being made by forming distribution constant circuit on a lossy substrate, the part of the UWBPF is of a small scale and low-loss, it is not necessary to use a high-power signal source at the transmitting side, and further, it is not necessary that the waveshape forming filter is precise and fine. Thus, the present invention enables UWB transmission using a small scale, low-cost device.

The UWBPF used in the present invention has such a wide band width as some GHz and such a low insertion loss as some dB's at 3dB band width of the filter, and therefore, even if the frequency band of the transmitted signal which was waveshape-formed by waveshape forming filter of the transmitting side is wider than the predetermined band, it is possible to band-limit which the UWBPF, i.e., the waveshape forming may be flexibly altered depending on the circumstances. Thus, the transmission system according to the invention may have various applications in addition to the experiments described below.

### EXAMPLES

### Experiment 1

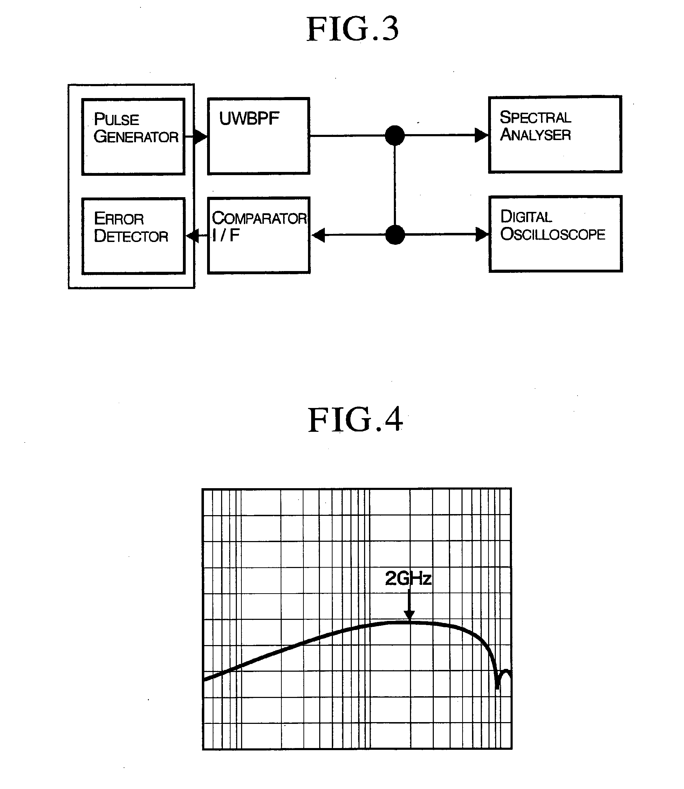

An experimental device of the components shown in Fig.2 was constructed to determine the transmission characteristics of UWB pulse signal exceeding 1Gbps under microwave band frequency limiting environment. The pulse generator can generate signal of at maximum 3Gbps, and the duty ratio (namely, pulse width/symbol distance of information) of the signal is variable. The UWBPF has the characteristics as shown in Fig.3, 3dB band width being 2GHz around the 2GHz center, and the insertion loss within 3dB band being up to some dBs.

Signal from the pulse generator is transmitted through the UWBPF to the receiving circuit. In the receiving circuit a synchronizing point is determined on the basis of known information signal series, and determination of 1/0 is carried out on the basis of the signal level at the synchronizing point. The output of the UWBPF and the input of the receiving circuit were connected with a coaxial cable. The output of the UWBPF was connected to a spectral analyzer and an oscilloscope.

The sending pulse and eye-pattern thereof after the signal of 1Gbps, which was transmitted at a duty ratio of 50%, passed the UWBPF are shown is Fig. 4. It is seen that the eye is open. The determined error rate was 0%, and no synchronizing loss was observed.

### Experiment 2

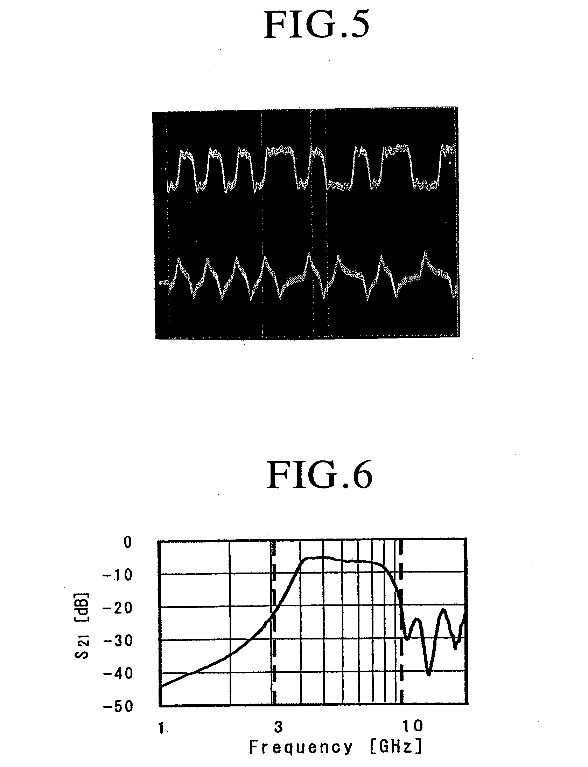

Because the basic transmission characteristics were ascertained as described above, trial was made on a UWBPF, which was prepared by, as explained above, forming a distribution constant circuit on a lossy substrate having low-pass function cutting the high frequency components. The S21 characteristics of this UWBPF were determined to be as shown in Fig. 5. The characteristics have sharp band rejection function suitable for the BPF used in 3.1-10.6GHz range. Good results were ascertained by trying wireless communication with signal of 1GHz using a set of a transmitter and a receiver both having the above UWBPF.

## Claims

1. A transmission system comprising the steps of: generating pulse signal by a short pulse generator, band-limiting the pulse signal by passing it though a waveshape forming filter, and transmitting the resulting pulse signal though a ultrawide band pass filter in a certain frequency band; and receiving the signal wave, passing the received signal wave though a ultrawide band pass filter of the same frequency range as that of the transmitting side, and introducing the signal wave through a pulse detector to a determining part; the ultrawide band pass filter being prepared by forming a distribution constant circuit on a lossy substrate having low-pass function cutting the high frequency components.

2. The transmission system of claim 1, wherein the ultrawide band pass filter used has the structure that an input signal line **2** and output signal line **3** both made of a conductive strip are disposed in series direction with a gap on one side of a sheet **1** made by dispersing soft magnetic metal powder in polymer matrix, that an internal line **6** made of the conductive strip is disposed with intermediation of an insulating film **5** in such a manner that the internal line bridges on both the input signal line and the output signal line, and that a GND line **4** is disposed on the reverse side of the sheet.

3. The transmission system of claim 1, herein the certain frequency range is 3.1-10.6GHz.

4. A transmitter used for the transmission system of claim 1, comprising a short pulse generator generating pulse signal of sub-nanosecond, an waveshape forming filter for band limiting, an ultra wide band pass filter passing the signal in a certain frequency range, and a transmitting antenna.

5. A receiver used for the transmission system of claim 1, comprising a receiving antenna, a ultrawide band pass filter passing signal of a certain frequency range, a pule detector, and a determining part.

6. The transmitter of claim 4, wherein the certain frequency range is 3.1-10.6GHz.

7. The receiver of claim 5, wherein the certain frequency range is 3.1-10.6GHz.
